# EUROPEAN PATENT APPLICATION

(11) **EP 3 582 059 A1**
(43) Date of publication of application: **18.12.2019**
(21) Application number: 18177578.4
(22) Date of filing: 13.06.2018
(51) Int. Cl.: G05D 23/24

(54) **HEATING DEVICE AND ASSOCIATED CONTROL METHOD**

(71) Applicant: Valeo Klimasysteme GmbH, 96476 Bad Rodach (DE)
(72) Inventor: JEDIDI, Hamdi, 96476 Bad Rodach (DE); HERZOG, Anton, 96476 Bad Rodach (DE); LUEER, Armin, 96476 Bad Rodach (DE)
(74) Representative: Metz, Gaëlle

(57) **Abstract**

Claimed invention relates to a heating device (20) comprising:
- at least one heating element (1) configured to heat a fluid circulating in contact with the heating element (1),
- an electric power supply (4) configured to supply the heating element with electrical power in order to generate heat,
- a control device (5) which controls the heating element (1), the control device (5) comprising at least one transistor (6) that enables electrical current to flow in the heating element when the transistor is in a conductive state and that turns off electrical current when the transistor is in a blocked state,
wherein the control device (5) is configured to compute an internal temperature of the heating element (1) based on measured intensity of current flowing through the heating element (1) and based on measured voltage difference across the heating element (1),
wherein the control device (5) is configured to control the heating element (1) in response to the computed internal temperature.

## Description

The present invention relates to an electric heating device for a motor vehicle, which can heat a fluid. Such heating device may be integrated into an air conditioning unit that controls the temperature of the vehicle passenger compartment.

Invention also relates to a method of controlling such electric heating device.

Temperature, and more generally quality of ambient air inside vehicle passenger compartment is controlled by an equipment usually known as heating, ventilation and/or air conditioning unit. (usually abbreviated by the acronym « HVAC »)

The HVAC unit includes a heat exchanger in which can flow a liquid heated up by the combustion engine of the vehicle. The air that is blown into passenger compartment flows through this heat exchanger and thus can be heated.

During the warm-up phase of the vehicle, which means the few minutes after the start of the vehicle, combustion engine is not warm enough to deliver all the heat flow required to obtain the set-up temperature. Passenger compartment temperature remains lower than the expected set-up temperature for a duration which depends on operating conditions of vehicle. Thermal comfort of passengers is compromised during this phase.

Methods to accelerate the warm-up of passenger compartment are known. For exemple, solution proposed by patent FR 3 042 854 is to add an electric additional heater.

This heater comprises heating elements that are electrically heated. Electric power is provided by vehicle battery when heater is activated, and a control device manages the activation and deactivation of the additional heater.

On an hybrid vehicle, this heater may be used not only during the warm-up phase of the vehicle, but also during every operating conditions during which the combustion engine is not running.

When used on a purely electric vehicle, this heater becomes the main heater of the vehicle.

In some cases, there is a risk that heating power of heater may cause overheating. This happens for example when fluid flow around heating element is insufficient. In such a case, heat is not adequately transferred from the heater to the fluid and overheating may occur. When the heated fluid is air, this may happen in case of a faulty blower, or from a partially or totally blocked air duct. The overheating of heating element may damage the heating element itself, and may also damage other elements in the air conditioning unit, like the neighboring ducts which are generally made of plastic. Furthermore a small amount of air may be released at a high temperature which be harmful for the passagers standing close to air outlet.

In the applications in which the heated fluid is a liquid, overheating may happen in case of a leakage in the device causing the heating element not to be in contact with the liquid.

In either case, actual temperature of heating element is monitored in real time for safety reasons.

One known method for temperature monitoring of heating element is to implement a temperature sensor close to the heating element in order to monitor its temperature. In case temperature becomes too high for any reason, heating device is deactivated by the control device.

The implementation of a temperature sensor has the drawback of generating extra-cost, and increasing both the assembly time and the difficulty of assembly.

Present invention relates to a solution that provides real-time monitoring of heater temperature without the addition of a dedicated temperature sensor.

Invention relates as well to a control method providing overheating protection of an electric heating device.

To this end, the invention relates to a heating device comprising:
- at least one heating element configured to heat a fluid circulating in contact with the heating element,
- an electric power supply configured to supply the heating element with electrical power in order to generate heat,
- a control device which controls the heating element, the control device comprising at least one transistor that enables electrical current to flow in the heating element when the transistor is in a conductive state and that turns off electrical current when the transistor is in a blocked state,
the control device is configured to compute an internal temperature of the heating element based on measured intensity of current flowing through the heating element and based on measured voltage difference across the heating element,
and the control device is configured to control the heating element in response to the computed internal temperature.

The measurement of current intensity through heating element, combined with measurement of voltage difference across heating element, are used to compute the temperature of the heating element. The addition of a specific temperature sensor is unnecessary. Heating device is simplified. Cost of primary parts is lower, and assembly time is lower as well.

Preferably, the control device is configured to control the heating element by alternatively switching the transistor into conductive state and into blocked state.

Average value of current is therefore adjusted by the ratio between time in conductive state and time in blocked state.

According to an embodiment of the invention, the transistor is IGBT type or Mosfet type. These types of transistors are well suited to such applications.

Preferably, the control device comprises:
- a circuit configured to measure intensity of current flowing through the heating element,
- a circuit configured to measure voltage difference across the heating element.

The measurement of these two physical parameters will be used to determine electrical resistance.

According to an embodiment of the invention, the control device is configured to compute internal resistance of the heating element based on measured intensity of current flowing through the heating element and on measured voltage difference across the heating element, the control device is configured to determine a direction of variation of the internal resistance of the heating element,
the control device is configured to compute internal temperature of the heating element by comparing computed resistance with a reference table of variation of internal resistance of the heating element versus temperature.

Electrical resistance of the heating element is a characteristic function of its internal temperature. This function is not monotonic. Once electrical resistance and direction of variation of temperature are determined, internal temperature can be unambiguously determined. Accuracy of the method can be improved by performing an individual calibration of each heating element. It is meant that during manufacturing of heating device, each heating element resistance is measured versus actual temperature. Therefore, dispersion between parts can be compensated for.

Advantageously, the control device comprises a memory configured to store a set of reference values defining the reference table, each heating element being associated with its own set of reference values.

Individual calibration curve of heating element, or more precisely individual calibration table is stored in a heating device memory. Permanent memory is used so that equipment can be disconnected without resetting the calibration data.

According to a preferred embodiment of the invention, the heating element comprises a positive temperature coefficient heater.

This type of heater is reliable and easy to control.

In a variant of this embodiment, the heating element comprises a set of positive temperature coefficient heaters, wherein the heaters are juxtaposed.

By combining several heaters together, heating power can be adjusted to the requirements of the application.

According to a characteristic of the invention, voltage of electric power supply is higher than 300 volts.

This value of supply voltage is available with the batteries of electric vehicles. Heating devices may take benefit of such a voltage to deliver higher heating power compared to 12 volts solutions.

According to an embodiment of the invention, voltage of electric power supply is higher than 700 volts.

Preferably, the control device is configured to control the transistor in pulse width modulation mode.

Such control is easy to perform and accurate.

According to a characteristic of the invention, the control device is configured to control the transistor with constant control period.

Preferably, the heating device comprises a deactivation circuit of the control device, deactivation circuit being connected in serial connection between electric power supply and control device, deactivation circuit being configured to open electrical circuit is response to failure of control device.

A failure of control device creating a short circuit may result in a permanent actuation of heating device, resulting in overheating. The deactivation circuit is there to open electrical circuit and prevent accidental overheating.

According to an embodiment of the invention, the control device comprises a printed circuit board on which transistor is connected, wherein printed circuit board comprises a temperature sensor that measures temperature of printed circuit board.

Monitoring of power electronics temperature can be done with the temperature sensor located on printed circuit board (PCB). This monitoring comes on top of the monitoring of heating element in order to provide additional safety controls.

Preferably, the temperature sensor is located on a surface of printed circuit board. Temperature sensor can be located close to the area to be monitored.

According to an embodiment of the invention, the temperature sensor is a negative temperature coefficient resistor.

Such sensor is small, inexpensive and be easily implemented on the PCB.

Advantageously, printed circuit board extends in a plan transverse to the axis of the heating element.

According to an embodiment of the invention, the heating device comprises a housing that receives the heating element and the control device, the housing comprises a cover that defines a closed cavity of the housing, and the printed circuit board is located between the heating element and the cover.

Housing supports the main elements of the heating device. Cover seals the housing and protects all the contained elements versus ingress of particulates or humidity.

According to an embodiment of the invention, the temperature sensor of the printed circuit board is located on the surface of the printed circuit board facing the heating element. Temperature sensor is therefore exposed to both heat dissipated by power electronics and heat radiated by heating elements.

As a variant, the temperature sensor of the printed circuit board is located on the surface of printed circuit board orientated away from the heating element and facing the cover.

In this arrangement, temperature sensor can also be exposed to the heat that may come from outside the heating device.

According to an embodiment of the invention, the heating device comprises:
- a housing through which a fluid can flow,
- three heating elements contained in the housing, the heating elements being capable of heating the fluid,
- a control device configured to control each heating element independently from the other heating elements.

This particular embodiment may supply different heating power to three different zones of the passenger compartment. These three zones may be the windscreen area, the area near the feet of the front passengers, and a third zone for the rest of the passenger bay. In this embodiment, each heater temperature is monitored independently from the others. According to a characteristic of this embodiment, the control device comprises three transistors, each transistor being associated with a different heating element and configured to control one heating element.

Preferably, heating elements extend in parallel directions.

Advantageously, heating elements extend in the same plane.

Heating device can thus be compact, and be easily be inserted into the HVAC.

Present invention is also related to a heating, ventilating and/or air-conditioning installation of a motor vehicle, comprising a heating device as described before.

Invention relates as well to a method of controlling a heating device, the heating device comprising:
- at least one heating element configured to heat a fluid circulating in contact to the at least one heating element,
- an electric power supply which is configured to supply the heating element with electrical power in order to generate heat,
- a control device which is configured to control the heating element, the control device comprising at least one transistor that enables electrical current to flow in the at least one heating element when the transistor is in a conductive state and that turns off electrical current when the transistor is in a blocked state,
the method comprising the following steps:
- an internal temperature of the heating element is computed by the heating device based on measured intensity of current flowing through heating element and based on measured voltage difference across heating element,
- the heating element is controlled by the heating device in response to the computed internal temperature (step 64).

As mentioned before, the proposed control method delivers a monitoring of temperature without using a dedicated temperature sensor.

According to a characteristic of the invention, the method comprises the following step:
- the heating element is controlled by the control device by alternatively switching the transistor into conductive state and into blocked state.

According to another characteristic of the invention, the method comprises the following steps:
- intensity of current flowing through the heating element is measured (step 60),
- voltage difference across the heating element is measured (step 61),
- internal resistance of the heating element is computed based on measured intensity of current flowing through the at least one heating element and on measured voltage difference across the heating element.

This calculation is performed each time transistor is switched on.

According to another characteristic of the invention, the method comprises the following steps:
- direction of variation of internal resistance of the heating element is determined (step 62),
- internal temperature of heating element is computed by comparing calculated resistance with a reference table of variation of internal resistance of the heating element versus temperature (step 63).

Direction of variation of electrical resistance of the heating element is determined from the comparison between the successive calculations. Characteristic curve of resistance versus temperature is not monotonic, and in most of the temperature range a given resistance is obtained for two different temperatures. The indication provided by the direction of variation allows the identification of the correct temperature value.

According to another characteristic of the invention, electrical resistance of heating element is computed by dividing the intensity of current flowing through the heating element by the voltage difference across heating element.

This calculation is performed each time transistor is switched on.

Preferably, each heating element is controlled in pulse width modulation mode.

According to a characteristic of the invention, the method comprises the following step:
- Actuation time of heating element is decreased by decreasing pulse width modulation ratio if internal temperature of heating element is greater than or equal to a first predetermined threshold (step 65).

In case temperature gets above a recommended temperature, heater power is decreased. Heater remains active with a lower heating power.

According to another characteristic of the invention, the method comprises the following step:
- Current in heating element is turned off if internal temperature of heating element is greater than or equal to a second predetermined threshold (step 66).

Second predetermined threshold is higher than first predetermined threshold. In case the power limitation provided at previous step wasn't enough to prevent a further temperature rise, heater is completely turned off to avoid further overheating and resulting damages.

According to an embodiment of the invention, method comprises the following step:
- Temperature of printed circuit board is measured (step 67).

Temperature of heating device housing and temperature of printed circuit board are correlated. Therefore monitoring of PCB temperature provides additional monitoring of the operation of heating device. Safety is improved.

According to a characteristic of the invention, the method comprises the following step:
- Actuation time of heating element is decreased by decreasing pulse width modulation ratio if temperature of printed circuit board is greater than or equal to a third predetermined threshold (step 68).

According to another characteristic of the invention, the method comprises the following step:
- Current in heating element is turned off if temperature of printed circuit board is greater than or equal to a fourth predetermined threshold (step 69).

Forth predetermined threshold is higher than third predetermined threshold. If temperature exceeds the third threshold, heating power is reduced. If temperature goes above fourth threshold, heating element is completely switched off.

Present invention is finally related to a method of manufacturing a heating device, comprising the following steps:
- For each individual heating element of the heating device, variation of electrical resistance versus temperature is measured for a set of reference temperatures comprised between a first reference threshold and a second reference threshold, measured value of resistance for a given reference temperature defining a reference resistance,
- set of reference resistances is stored in permanent memory of the control device to define a reference table of variation of internal resistance of the heating element versus temperature. As explained before, characteristic curve of electrical resistance versus temperature is not strictly identical between the heating elements, even if the heating elements are theoretically identical. This comes from the dispersions between the heating elements themselves, and also between the different electronic components that are used to perform the different electrical measurements. As a result, the actual values of parameters are spread across a distribution. It could be considered to use an average reference table coming from the average or most frequent characteristics. In such a case reference table would be identical for all manufactured parts. Nevertheless accuracy of temperature computation can be improved by performing an individual calibration of each heating device. For that, each heating device is operated and characterized, for example at the end-of-line check. Different actuation profiles are applied, with a temperature measurement performed by a sensor integrated in the control equipment. For each defined operating condition, actual temperature is recorded together with the corresponding computation of electrical resistance. Then a different heating power is generated so that a different temperature is obtained. The process is repeated as many times as necessary, with a trade-off between improved accuracy when temperature sweep is performed with small temperature increment, and increased duration of the calibration. In other words, the different heating elements of a given heating device are individually calibrated, and all the heating devices that are manufactured are also individually calibrated.

Preferably, set of reference values is stored in an eeprom.

Reference table is permanently stored without needing to maintain memory power supply.

Further features, details, advantages of the invention will become clear upon reading the following detailed explanatory description of a number of illustrative non-limiting embodiments of the invention given merely by way of example, with reference to the accompanying schematic drawings.

In these drawings:
- Figure 1 is a sectional view of a heating, ventilating and/or air conditioning installation in which a heating device in accordance with an embodiment of the invention is integrated,
- Figure 2 is a fragmentary schematic view of the HVAC installation,
- Figure 3 is a fragmentary side view of a heating device according to an embodiment of the invention,
- Figure 4 is a curve showing evolution of electric resistance of a heating element in function of its temperature,
- Figure 5 illustrates correlation between housing temperature and printed circuit board temperature in a heating device,
- Figure 6 is a block diagram of the control method.

The different elements are not necessarily drawn to scale in order to better illustrate some details.

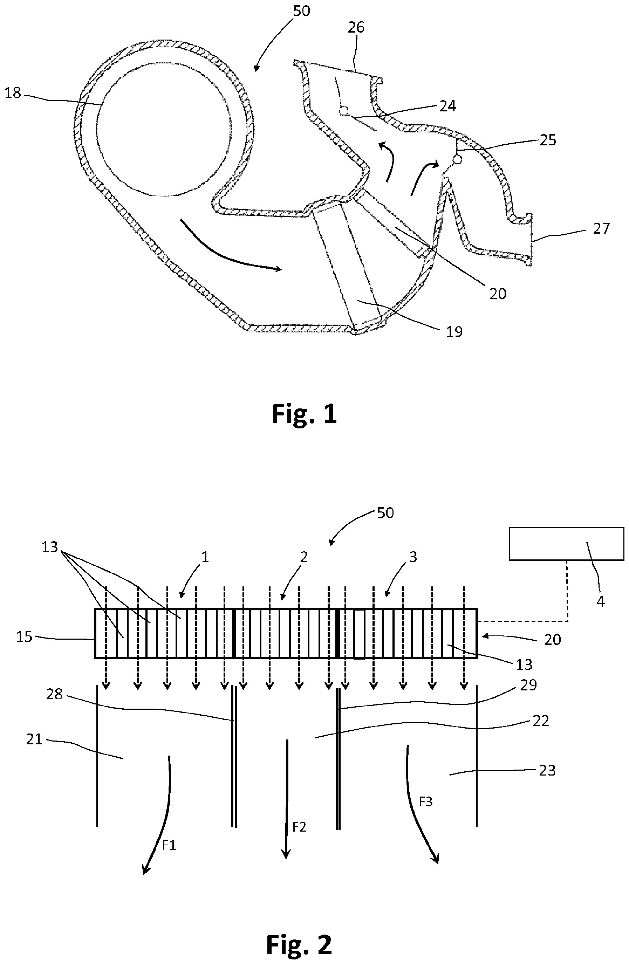

Figure 1 shows a schematic view a heating, ventilating and/or air conditioning installation 50 of a motor vehicle comprising a heating device 20 in accordance with the invention.

Motor vehicle can be for example a car, a van, a bus or a truck.

Air from outside the vehicle is blown into the passenger bay by a blower 18. This air flows through a heat exchanger 19 having circulation channels for the coolant liquid of the combustion engine of the vehicle. In steady thermal conditions of the engine, the air flowing through heat exchanger 19 is warmed-up by the engine coolant.

Air then flows through the heating device 20. Heating device 20 comprises electric heating elements. Therefore, heating device 20 can complement or replace the heat provided by heat exchanger 19.

During the warm-up phase of the vehicle, combustion engine is not warm enough to deliver the heat flow required to obtain set-point temperature of passenger bay. The heating device 20 speeds up the temperature rise by delivering additional heat flow that adds up to the heat provided by heat exchanger 19.

In an hybrid vehicle, combustion engine may not be running for extended periods of time. In this operation mode heat flow is provided by the heating device 20 only.

In an electric vehicle, heating device 20 is the only heater of the vehicle.

Air flow is then orientated by flaps 24,25 towards outlets 26 and 27.

A first outlet may deliver air to the windscreen area, a second outlet may be for the footwell area, and a third outlet may be for the remaining areas. Only two outlets are shown on figure 1.

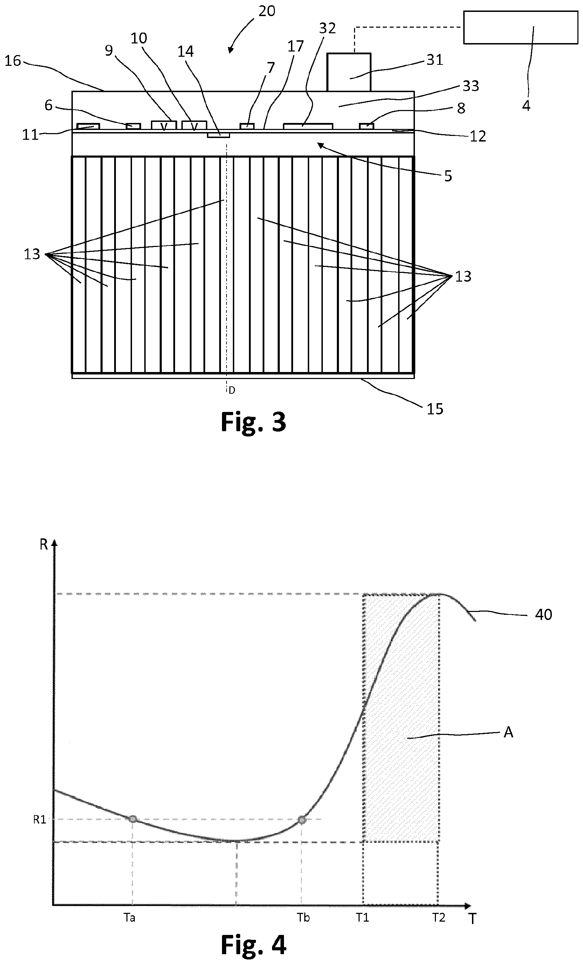

According to the particular embodiment presented on figure 3, the heating device comprises:
- a housing 15 through which a fluid can flow,
- three heating elements 1,2,3 contained in the housing 15, the heating elements 1,2,3 being capable of heating the fluid,
- a control device 5 configured to control each heating element 1,2,3 independently from the other heating elements.

In this particular example, the control device 5 comprises three transistors 6,7,8, each transistor 6,7,8 being associated with a different heating element 1,2,3 and configured to control one heating element 1,2,3. In other words, transistor 6 controls heating element 1, while transistor 7 controls heating element 2 and transistor 8 controls heating element 3. Electrical power is supplied to heating elements 1,2,3 by power supply 4. Connector 31 connects heating device 20 to electric power supply 4.

Heated fluid is air in the described example.

As illustrated on figure 2, each heating element 1,2,3 can heat a different air flow. Three different thermal zones 21, 22, 23 can therefore be managed independently. Partition walls 28 and 29 split incoming air flow and orientate individual air flows towards three different zones. These three zones 21, 22, 23 may correspond to the windscreen area, the footwell area, and the rest of the passenger bay. The three arrows F1, F2, F3 illustrate the airflow supplying each of the three zones 21, 22, 23.

The heating element 1 comprises a positive temperature coefficient heater.

More precisely, the heating element 1 comprises a set of positive temperature coefficient heaters 13, wherein the heaters 13 are juxtaposed. In other words, several individual heaters 13 are combined together to form a heating element 1. The other heating elements 2, 3 are similarly built. Number of individual hearters may be different between different heating elements.

Arrows in dashed lines illustrate air flow across the fins separating two successive individual heaters 13.

Heating elements 1,2,3 extend in parallel directions.

Furthermore, heating elements 1,2,3 extend in the same plane.

Concept presented here is applicable to a heating device 20 with any number of heating elements and associated control transistors.

In its generic form, the heating device 20 comprises:
- at least one heating element 1 configured to heat a fluid circulating in contact with the heating element 1,
- an electric power supply 4 configured to supply the heating element with electrical power in order to generate heat,
- a control device 5 which controls the heating element 1, the control device 5 comprising at least one transistor 6 that enables electrical current to flow in the heating element when the transistor is in a conductive state and that turns off electrical current when the transistor is in a blocked state,
the control device 5 is configured to compute an internal temperature of the heating element 1 based on measured intensity of current flowing through the heating element 1 and based on measured voltage difference across the heating element 1,
and the control device 5 is configured to control the heating element 1 in response to the computed internal temperature.

The measurement of current intensity through heating element 1 is combined with measurement of voltage across heating element 1 in order to compute the temperature of the heating element 1. The addition of a specific temperature sensor to measure heating element temperature is unnecessary. Heating device is simplified. Cost of primary parts of heating device is reduced, and its assembly time is as well shorter. When the heating device comprises several heating elements the same principle is applied to every heating element.

The control device 5 is configured to control the heating element 1 by alternatively switching the transistor 6 into conductive state and into blocked state.

Average value of current is therefore adjusted by the ratio between time in conductive state and time in blocked state.

The transistor 6 can be an IGBT type transistor. As a variant, a Mosfet type transistor can also be used. ("IGBT" for "Insulated Gate Bipolar Transistor" and "Mosfet" for "Metal Oxyde Semiconductor Field Effet Transistor".)

The control device 5 comprises:
- a circuit 9 configured to measure intensity of current flowing through the heating element 1,
- a circuit 10 configured to measure voltage difference across the heating element 1.

The measurement of these two physical parameters will be used to determine electrical resistance.

Control device 5 comprises a microcontroller 32 that performs the functions of data acquisition and calculation. Control device 5 comprises a printed circuit board 12 connecting the different circuits and electronic components.

According to an embodiment of the invention, the control device 5 is configured to compute internal resistance of the heating element 1 based on measured intensity of current flowing through the heating element 1 and on measured voltage difference across the heating element 1,
the control device 5 is configured to determine a direction of variation of the internal resistance of the heating element 1,
the control device 5 is configured to compute internal temperature of the heating element 5 by comparing computed resistance with a reference table of variation of internal resistance of the heating element 5 versus temperature.

Electrical resistance of the heating element is a characteristic function of its internal temperature. This function is not monotonic. Once electrical resistance and direction of variation of temperature are determined, internal temperature can be unambiguously determined. Accuracy of the method can be improved by performing an individual calibration of each heating element. It is meant that during manufacturing of heating device, each heating element resistance is measured versus actual temperature. Therefore, dispersion between parts can be compensated.

The control device 5 comprises a memory configured to store a set of reference values defining the reference table, each heating element being associated with its own set of reference values.

Individual calibration curve of heating element, or more precisely individual calibration tables are stored in a heating device memory. Permanent memory is used so that equipment can be disconnected without resetting the calibration data.

According to an embodiment, voltage of electric power supply 4 is higher than 300 volts.

This value of supply voltage is available with the batteries of electric vehicles.

According to another embodiment of the invention, voltage of electric power supply 4 is higher than 700 volts.

The control device 5 is configured to control the transistor 6 in pulse width modulation mode. In other words, transistor 6 switches on the current through the heating element 1 for a fraction of the command period, and switches off the current for the remaining fraction of the command period. Average heating power can be adjusted to any value between maximum power and no dissipated heat by adjustment of the pulse width ratio of the transistor 6.

In presented example the control device 5 is configured to control the transistor 6 with constant control period. Control period can for example be 10 milliseconds, corresponding to a control frequency of 100 Hertz. Transistors 7 and 8 are controlled with the same control frequency.

The heating device 20 comprises a deactivation circuit 11 of the control device 5, deactivation circuit 11 being connected in serial connection between electric power supply 4 and control device 5, deactivation circuit 11 being configured to open electrical circuit is response to failure of control device 5.

Failure of the transistor or one of the transistors may create a short circuit resulting in a permanent actuation of heating element. Such event may cause an overheating with the associated hazards for equipments and users. The deactivation circuit is there to open electrical circuit and prevent accidental overheating and associated damages.

The control device 5 comprises a printed circuit board 12 on which transistor 6 is connected, wherein printed circuit board 12 comprises a temperature sensor 14 that measures temperature of printed circuit board 12.

Monitoring of power electronics temperature can be done with the temperature sensor located on printed circuit board. This monitoring comes on top of the monitoring of heating element in order to provide additional safety controls.

The temperature sensor 14 is located on a surface of printed circuit board 12.

Temperature sensor can be located close to the area to be monitored.

The temperature sensor 14 is here a negative temperature coefficient resistor.

Such sensor is small, inexpensive and be easily implemented on the PCB.

Printed circuit board 12 extends in a plan transverse to the axis D of the heating element 1. The heating device 20 comprises a housing 15 that receives the heating element 1 and the control device 5, the housing 15 comprises a cover 16 that defines a closed cavity 33 of the housing 15, and the printed circuit board 12 is located between the heating element 1 and the cover 16.

Housing 15 supports the main elements of the heating device 20. Cover 16 seals the housing 15 and protects all the contained elements versus ingress of particulates or humidity.

On the example described on figure 2, the temperature sensor 14 of the printed circuit board 12 is located on the surface 17 of the printed circuit board 12 facing the heating element 1. Temperature sensor is therefore exposed to both heat dissipated by power electronics and heat radiated by heating elements.

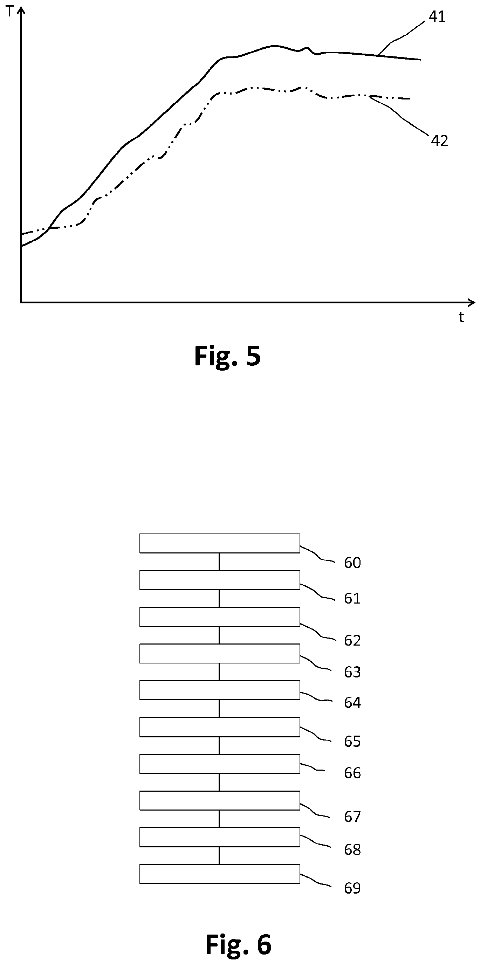

Figure 6 is a block diagram of the method of control associated with a heating device according to the invention.

The method of controlling a heating device 20, the heating device 20 comprising:
- at least one heating element 1 configured to heat a fluid circulating in contact to the at least one heating element 1,
- an electric power supply 4 which is configured to supply the heating element 1 with electrical power in order to generate heat,
- a control device 5 which is configured to control the heating element 1, the control device 5 comprising at least one transistor 6 that enables electrical current to flow in the at least one heating element 1 when the transistor 6 is in a conductive state and that turns off electrical current when the transistor 6 is in a blocked state,
the method comprises the following steps:
- an internal temperature of the heating element 1 is computed by the heating device 20 based on measured intensity of current flowing through heating element 1 and based on measured voltage difference across heating element 1,
- the heating element 1 is controlled by the heating device 20 in response to the computed internal temperature (step 64).

Computation of internal temperature of heating element is performed only using parameters related to electrical condition of the heating element. No additional temperature sensor is used. Heating device can thus be simplified.

All the heating elements are controlled with the same method. The described method can be be used for embodiments in which there's a single heating element.

The control method comprises the following step:
- the heating element 1 is controlled by the control device 5 by alternatively switching the transistor 6 into conductive state and into blocked state.

Each heating element 1,2,3 is controlled in pulse width modulation mode.

The control method comprises the following steps:
- intensity of current flowing through the heating element 1 is measured (step 60),
- voltage difference across the heating element 1 is measured (step 61),
- internal resistance of the heating element 1 is computed based on measured intensity of current flowing through the at least one heating element 1 and on measured voltage difference across the heating element 1.

This calculation is performed each time transistor is switched on.

The control method comprises the following steps:
- direction of variation of internal resistance of the heating element 1 is determined (step 62),
- internal temperature of heating element is computed by comparing calculated resistance with a reference table of variation of internal resistance of the heating element 5 versus temperature (step 63).

Direction of variation of electrical resistance of the heating element is determined from the comparison between the successive calculations performed at different times.

Figure 4 shows the evolution of a positive temperature coefficient heating element in function of its temperature.

When calculated electrical resistance of heating element is equal to R1, temperature can be equal to Ta or to Tb. Around Ta temperature, curve 40 has a negative slope, which means that resistance decreases when temperature increases. Around Tb curve has a positive slope, which means that resistance increases when temperature increases. Therefore, when both actual value of resistance and direction of variation have been determined, actual temperature can be computed from curve 40.

Electrical resistance of heating element 1 is computed by dividing the intensity of current flowing through the heating element 1 by the voltage difference across heating element 1. This calculation is performed each time transistor is switched on.

The control method comprises the following step:
- Actuation time of heating element 1 is decreased by decreasing pulse width modulation ratio if internal temperature of heating element 1 is greater than or equal to a first predetermined threshold T1 (step 65). T1 threshold is usually between 155 °C and 165 °C.

In case temperature gets above a recommended temperature, heater power is decreased. Heater remains active with a lower heating power.

The method comprises the following step:
- Current in heating element 1 is turned off if internal temperature of heating element 1 is greater than or equal to a second predetermined threshold T2 (step 66).

Second predetermined threshold T2 is higher than first predetermined threshold T1. T2 threshold is usually between 190 °C and 200 °C.

In case the power limitation provided at previous step wasn't enough to prevent a further temperature rise, heating element is completely turned off to avoid further overheating and resulting damages.

T1 and T2 threshold temperatures can be seen on figure 4. T1 and T2 thresholds selection is based on heating element characteristics, heating installation geometry and material properties. Range of temperatures between T1 and T2 is called "thermal protection range". Rectangle A in dashed lines illustrates the area in which thermal protection is active. The control method is applied to each heating element of the heating device.

As an option, method may comprise the following step:
- Temperature of printed circuit board 12 is measured (step 67).

As presented on figure 5, temperature of printed circuit board and temperature of the housing of heating device are correlated.

Curve 41 in solid line shows, during activation of the heating device, the evolution of the temperature of the housing 15 of the heating device 20 versus time. Curve 42 in dashed line shows the evolution of the temperature of the printed circuit board 12 versus time in the same conditions. Curve 41 and curve 42 are strongly correlated, with an offset between the two curves which is sensibly constant.

In some conditions of operation, temperature of the housing 15 may be too high even if temperature of each heating element 1,2,3 is still within an acceptable range. Housing 15 temperature is not directly measured by a sensor but can be estimated from the measured temperature of printed circuit board 12. Therefore the optional measurement of PCB temperature provides an additional possibility of detecting a possible overheating at an early stage. Operational safety of heating device 20 and HVAC 50 is improved.

According to a characteristic of the invention, the method comprises the following step:
- Actuation time of heating element 1 is decreased by decreasing pulse width modulation ratio if temperature of printed circuit board 12 is greater than or equal to a third predetermined threshold T3 (step 68).

T3 threshold temperature can be for example between 115° C and 125°C.

According to another characteristic of the invention, the control method comprises the following step:
- Current in heating element is turned off if temperature of printed circuit board 12 is greater than or equal to a fourth predetermined threshold T4 (step 69).

Fourth predetermined threshold is higher than third predetermined threshold. If temperature exceeds the third threshold, heating power is reduced. If temperature goes above fourth threshold, heating element is completely switched off.

Present invention is also related to a method of manufacturing a heating device 20, comprising the following steps:
- For each individual heating element of the heating device 20, variation of electrical resistance versus temperature is measured for a set of reference temperatures comprised between a first reference threshold and a second reference threshold, measured value of resistance for a given reference temperature defining a reference resistance,
- set of reference resistances is stored in permanent memory of the control device 5 to define a reference table of variation of internal resistance of the heating element versus temperature.

Set of reference resistances define the reference table that will be used for heating element temperature computation.

In other words, each manufactured heating device is individually calibrated. By this way, dispersions of the characteristics of the heating elements and also of all the components involved in the computation of electrical resistance can be compensated for.

Individual calibration is performed in the following way:
Once heating device 20 has been fully assembled, it is connected to a test jig that can activate selectively each heating element of the heating device. Actual temperature of heating element is measured by the jig. Temperature measurement methods include use of a thermocouple put in contact with the heating element or at least in immediate proximity of this heating element. Temperature measurement method can also be done with a thermal camera.

Heating power is adjusted by the test jig so that measured temperature is equal to a defined set-point. Actual electrical resistance corresponding to the temperature set-point is recorded.

Then a new temperature set-point is applied, and process is repeated. Temperature sweep is performed from ambient temperature up to maximum temperature that is safe for the heating element. The number of measurements across the defined range results of a trade-off between accuracy and time required to perform the measurements. As an exemple, individual calibration can be done with a 10°C increment step between two measurements.

The actual electrical resistance corresponding to each temperature set-point defines a set of reference values. This set of reference values is also called reference table, and will be used for temperature computation during operation is the vehicle.

The set of reference values is stored in an eeprom. ("eeprom" from "Electrically Erasable Programmable Read-Only Memory".)

According to embodiments that are not represented, the heating device together with the HVAC integrating it and the associated control method may have one or several of following features, in isolation or combined together:
- Fluid heated by the heating device may be a liquid. For example, it may be the liquid from the engine coolant circuit. In that case the heating device performs indirect heating of the air supplied to the passenger bay of the vehicle.
- The temperature sensor 14 of the printed circuit board 12 may be located on the surface of printed circuit board 12 orientated away from the heating element 1 and facing the cover 16.
   In this arrangement, temperature sensor can exposed also to the heat that may come from outside the heating device.

A person of ordinary skill in the art would realize that various modifications and variants can be derived from the presented embodiments. Scope of protection is not limited by description which is only indicative and is defined by the following claims set.

## Claims

1. A heating device (20) comprising:
- at least one heating element (1) configured to heat a fluid circulating in contact with the heating element (1),
- an electric power supply (4) configured to supply the heating element with electrical power in order to generate heat,
- a control device (5) which controls the heating element (1), the control device (5) comprising at least one transistor (6) that enables electrical current to flow in the heating element when the transistor is in a conductive state and that turns off electrical current when the transistor is in a blocked state,
wherein the control device (5) is configured to compute an internal temperature of the heating element (1) based on measured intensity of current flowing through the heating element (1) and based on measured voltage difference across the heating element (1), wherein the control device (5) is configured to control the heating element (1) in response to the computed internal temperature.

2. The heating device (20) as claimed in claim 1, wherein the control device (5) is configured to compute internal resistance of the heating element (1) based on measured intensity of current flowing through the heating element (1) and on measured voltage difference across the heating element (1),
wherein the control device (5) is configured to determine a direction of variation of the internal resistance of the heating element (1),
wherein the control device (5) is configured to compute internal temperature of the heating element (5) by comparing computed resistance with a reference table of variation of internal resistance of the heating element (5) versus temperature.

3. The heating device (20) as claimed in claim 1 or 2, wherein the control device (5) comprises a memory configured to store a set of reference values defining the reference table, each heating element being associated with its own set of reference values.

4. The heating device (20) as claimed in any one of claims 1 to 3, wherein the heating element (1) comprises a positive temperature coefficient heater.

5. The heating device (20) as claimed in any one of claims 1 to 4, wherein voltage of electric power supply (4) is higher than 700 volts.

6. The heating device (20) as claimed in any one of claims 1 to 5, wherein the control device (5) is configured to control the transistor (6) in pulse width modulation mode.

7. The heating device (20) as claimed in any one of claims 1 to 6, wherein the control device (5) comprises a printed circuit board (12) on which transistor (6) is connected, wherein printed circuit board (12) comprises a temperature sensor (14) that measures temperature of printed circuit board (12).

8. The heating device (20) as claimed in the preceding claim, wherein temperature sensor (14) is located on a surface of printed circuit board (12).

9. The heating device (20) as claimed in claim 7 or 8, comprising a housing (15) that receives the heating element (1) and the control device (5), wherein the housing (15) comprises a cover (16) that defines a closed cavity (33) of the housing (15), wherein the printed circuit board (12) is located between the heating element (1) and the cover (16).

10. Heating, ventilating and/or air-conditioning installation of a motor vehicle, comprising a heating device (20) as claimed in any one of the preceding claims.

11. A method of controlling a heating device (20), the heating device (20) comprising:
- at least one heating element (1) configured to heat a fluid circulating in contact to the at least one heating element (1),
- an electric power supply (4) which is configured to supply the heating element (1) with electrical power in order to generate heat,
- a control device (5) which is configured to control the heating element (1), the control device (5) comprising at least one transistor (6) that enables electrical current to flow in the heating element (1) when the transistor (6) is in a conductive state and that turns off electrical current when the transistor (6) is in a blocked state,
the method comprising the following steps:
- an internal temperature of the heating element (1) is computed by the heating device (20) based on measured intensity of current flowing through heating element (1) and based on measured voltage difference across heating element (1),
- the heating element (1) is controlled by the heating device (20) in response to the computed internal temperature (step 64).

12. The method according to the preceding claim, comprising the following step:
- Actuation time of heating element (1) is decreased by decreasing pulse width modulation ratio if internal temperature of heating element (1) is greater than or equal to a first predetermined threshold (T1) (step 65).

13. The method according to claim 11 or 12, comprising the following step:
- Temperature of printed circuit board (12) is measured (step 67).

14. The method according to the preceding claim, comprising the following step:
- Actuation time of heating element (1) is decreased by decreasing pulse width modulation ratio if temperature of printed circuit board (12) is greater than or equal to a third predetermined threshold (T3) (step68).

15. Method of manufacturing a heating device (20), comprising the following steps:
- For each individual heating element of the heating device (20), variation of electrical resistance versus temperature is measured for a set of reference temperatures comprised between a first reference threshold and a second reference threshold, measured value of resistance for a given reference temperature defining a reference resistance,
- set of reference resistances is stored in permanent memory of the control device (5) to define a reference table of variation of internal resistance of the heating element versus temperature.
